# FASCICULE DE BREVET EUROPEEN

(11) **EP 0 524 870 B1**
(45) Date de publication et mention de la délivrance du brevet: **27.09.1995**
(21) Numéro de dépôt: 92402095.1
(22) Date de dépôt: 21.07.1992
(51) Int. Cl.: G01L 21/34

(54) **Vacumètre à ionisation**
Ionisierungs-Vakuum-Messgerät
Ionization-vacuum gauge

(30) Priorité: 23.07.1991 FR 9109283
(43) Date de publication de la demande: 27.01.1993
(73) Titulaire: COMMISSARIAT A L'ENERGIE ATOMIQUE, 75015 Paris (FR)
(72) Inventeur: Baptist, Robert, F-38560 Jarrie (FR); Py, Christophe, F-38000 Grenoble (FR)
(74) Mandataire: Dubois-Chabert, Guy

(56) Documents cités:
- EP-A- 0 272 178
- DISCOVERY, vol. 25, no. 10, octobre 1964, London, GB, pages 15-16: "Measuring Vacuum by counting Molecules"

## Description

La présente invention se rapporte à un vacumètre à ionisation et concerne d'une façon générale la mesure des très basses pressions dans les enceintes où règne un ultravide (l'ultra-vide incluant l'extrême ultra-vide).

D'une manière connue, les vacumètres utilisés à cet effet sont des jauges à ionisation qui mesurent la pression de l'ultravide à partir de la densité des particules que contient l'atmosphère d'ultravide contenu dans un récipient déterminé. Le principe connu de fonctionnement de ces jauges consiste à ioniser une proportion des molécules ou des atomes du gaz constituant cette atmosphère par choc avec des électrons qui proviennent d'une source dont le débit est connu. Les ions du gaz ainsi formé sont ensuite recueillis par une électrode de mesure du système et le courant d'ions ainsi obtenu est une mesure analogique de la pression de l'ultravide règnant dans l'enceinte.

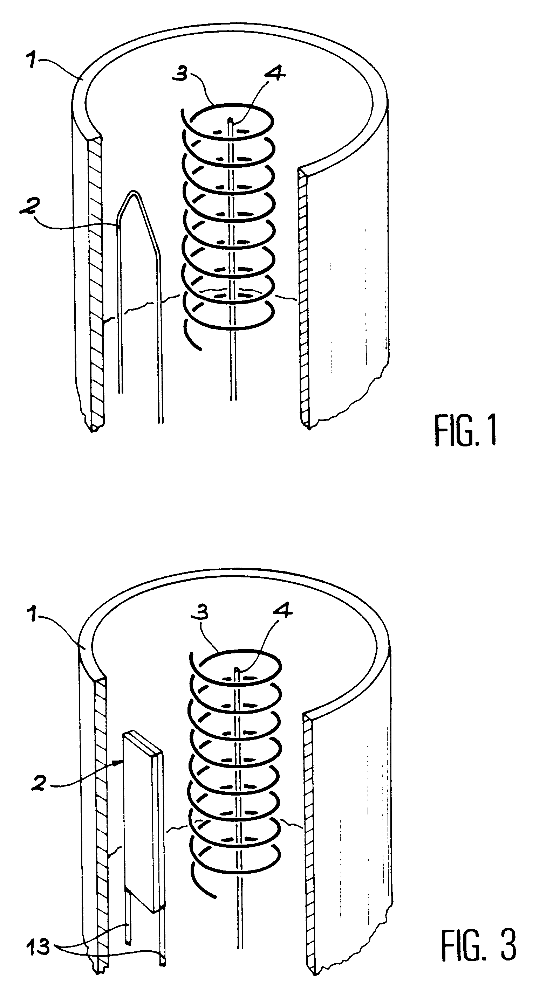

De façon également connue, la formation des ions précédemment mentionnés a lieu de deux manières différentes. Dans les vacumètres d'ionisation dits à cathode froide ou jauges de Penning, les ions se forment dans une décharge électrique entretenue et à haute intensité en présence d'un champ magnétique homogène. Dans une autre catégorie de vacumètres, l'ionisation est produite par collision avec des électrons émis par un filament chauffé et ce sont les vacumètres d'ionisation à cathode chaude. La présente invention a pour objet un vacumètre qui dérive des vacumètres à cathode chaude du type connu sous le nom de vacumètres Bayard-Alpert dont on commencera d'abord à rappeler le principe en se référant à la figure 1 qui décrit par conséquent un dispositif de l'art connu.

La Jauge Bayard-Alpert décrite sur la figure 1, qui est un schéma de principe en vue éclatée comprend essentiellement une enceinte 1 dans laquelle est située l'atmosphère à ultravide dont on veut déterminer la pression. Dans cette enceinte 1 se trouvent situées les trois électrodes du système, à savoir, la cathode chaude ou filament 2 destinée à l'émission d'un flux d'électrons, la grille-anode 3 et selon l'axe de la chambre 1, le collecteur d'ions 4. Dans l'exemple représenté, la grille-anode entoure le collecteur qui est disposé selon l'axe de la chambre 1, mais ceci n'est pas forcément le cas pour toutes les jauges de type Bayard-Alpert. Cette jauge travaille à faible tension et en l'absence de champ magnétique. Les électrons thermoélectroniques émis par la cathode 2 sont accélérés dans le champ électrique créé par la polarisation de l'anode 3 et y acquièrent une énergie suffisante pour ioniser le gaz compris dans le système inter-électrodes. Les ions positifs créés par chocs sont attirés par le collecteur 4 qui se trouve à un potentiel proche de celui de l'enceinte et le courant ainsi produit permet d'obtenir une mesure de la pression. Les électrons sont finalement captés par l'anode 3 qui se présente le plus souvent sous l'aspect d'un fil hélicoïdal. La cathode chaude est une source d'électrons très productive qui permet d'obtenir une bonne sensibilité, en particulier à très faible pression. De plus, les jauges à cathodes chaudes présentent par rapport à celles à cathodes froides un effet de pompage plus faible d'un ordre de grandeur.

La limite supérieure de pression mesurable par ce système se situe à quelques 10⁻³mbar ; elle est essentiellement due au fait qu'à de plus hautes pressions des arcs électriques ou des décharges lumineuses peuvent se produire. Il arrive alors que le filament puisse griller. Vers les basses pressions, la mesure est limitée par deux effets physiques qui sont :
- l'effet de désorption de l'anode sous l'influence des électrons venant la frapper. Cet effet est indépendant de la pression mais est proportionnel au courant d'émission électronique.
- l'effet Röntgen : lorsque les électrons viennent frapper l'anode, ils libèrent des photons (rayonnement X mou) qui vont à leur tour créer des photoélectrons en frappant les différentes surfaces, dont le collecteur. Les photoélectrons libérés par le collecteur s'écoulent à l'anode, créant ainsi un courant de même sens que le courant ionique. Cet effet devient prépondérant dans la gamme des 10⁻¹⁰mbar pour les jauges Bayard-Alpert.

La cathode chaude 2 est constituée d'un filament qui se trouve à l'extérieur du volume délimité par la grille. Les électrons émis par la cathode font des allers et retours à travers la grille jusqu'à être piégés. A titre d'exemple, pour un vide de 10⁻⁸mbar et un courant électronique de 1 mA, on obtient un courant ionique de 10 pA (pour un facteur de jauge de 10 mbar⁻¹).

Le principal défaut des jauges à cathodes chaudes provient de l'utilisation systématique d'un filament à incandescence en tant que source d'électrons.

Ce type de source thermoélectronique est en effet isotrope, alors que la directivité du faisceau d'électrons est un paramètre important pour la sensibilité de la jauge. On a en effet montré que la longueur moyenne des trajectoires électroniques est d'autant plus grande que celles-ci sont radiales, c'est-à-dire dirigées vers le collecteur 4 et l'on sait que la probabilité d'ionisation du gaz à l'intérieur de la zone délimitée par la grille 3 est directement proportionnelle à cette longueur moyenne (la probabilité d'ionisation augmente avec la longueur). C'est alors seulement dans la mesure où le champ est bien homogène autour du filament 2 que le faisceau est refocalisé par la grille ; c'est pourquoi la sensibilité de la jauge est très dépendante de la position du filament 2, qui peut par surcroît bouger au cours du temps ou s'affaisser sous l'effet de la chaleur (environ 2000°C), d'autant plus que les électrons émis par le filament quittent celui-ci avec une énergie cinétique quasiment nulle et sans directivité. Dans le même ordre d'idées, le fait que la source soit relativement étendue et que tous ses points n'émettent pas de manière semblable, rend plus difficile la refocalisation du faisceau d'électrons et nuit à sa régularité. Ces deux raisons font que la sensibilité de la jauge est un paramètre instable dans le temps et dans une certaine mesure non reproductible. En outre, le phénomène d'émission électronique étant d'origine thermique est coûteux en énergie, a un temps de réponse très long et est dans certaines applications un polluant non négligeable.

Un autre concept de mesure du vide a été décrit dans la revue britannique Discovery, vol. 25, n° 10, d'Octobre 1964, pages 15-16.

Cette structure, qui permet des mesures absolues de vide, utilise l'émission d'électrons par des pointes de tungstène d'un diamètre de quelques milliers d'angströms, utilisées comme cathodes émissives et constituant l'extrémité taillée de tiges métalliques macroscopiques, assez comparables par exemple à des clous. Ces macropointes sont placées dans l'enceinte dont on veut mesurer le degré de vide, en même temps qu'une anode polarisée. Un courant électrique s'établit ainsi entre les pointes qui constituent la cathode et l'anode polarisée. La méthode préconisée consiste à mesurer les fluctuations de ce courant, dues aux atomes de gaz qui viennent se fixer sur les pointes et que l'on considère comme représentatives du nombre d'atomes présents dans l'enceinte, c'est-à-dire finalement de la pression. Outre le fait qu'à très basse pression, il faut un temps considérable (plusieurs heures) pour avoir une mesure correcte de la pression, un tel système est difficilement utilisable en raison de la grande instabilité d'émission de la source cathodique ainsi constituée.

La présente invention a pour objet un vacumètre à ionisation dérivé des jauges du type Bayard-Alpert qui permet de s'affranchir des inconvénients précédents de façon simple.

Ce vacumètre à ionisation est caractérisé essentiellement en ce que la source d'électrons est une cathode froide à micropointes.

Comme on le verra dans la suite du texte, le fait de remplacer le filament chaud par une cathode froide à micropointes du type à émission par effet de champ ne doit pas faire penser que le vacumètre à ionisation, objet de l'invention, fait partie de la catégorie des jauges à cathode froide. Comme on l'a rappelé précédemment, cette dénomination est habituellement réservée aux jauges de Penning qui sont relativement rustiques, peu sensibles et qui fonctionnent sur un principe d'émission totalement différent (décharge électrique dans un champ magnétique).

Des cathodes froides à micropointes sont d'un type parfaitement connu dans la technique et la production d'électrons par effet de champ à partir de cathodes émissives à micropointes est parfaitement décrite, notamment par les brevets français n° 2,593,953 et 2,623,013.

Lorsque l'on met l'invention en oeuvre dans une structure de base du type jauge Bayard-Alpert, on remplace le filament par une cathode à micropointes ayant par exemple 1 mm de largeur et une hauteur suffisante pour que la surface émissive permette d'obtenir un courant comparable à celui qu'on aurait eu avec un filament. Sachant que l'émissivité moyenne d'une cathode à micropointes est de 1 mA/mm², on voit qu'une hauteur de quelques centimètres est largement suffisante pour obtenir un niveau d'émission important.

La cathode est disposée de telle manière que les micropointes soient en regard du collecteur afin que l'émission soit bien radiale. Son éloignement par rapport à la grille est calculé de manière à ce qu'elle trouble le moins possible le champ qui existe entre la grille d'anode et l'enceinte à vide généralement reliée à la terre, à l'intérieur de laquelle est montée la jauge.

L'utilisation d'une cathode froide à micropointes qui est une source d'électrons éminemment directive, permet par conséquent, en l'orientant correctement en direction de l'anode et du collecteur d'ions, de s'affranchir des inconvénients rappelés précédemment provenant du caractère isotrope de l'émission d'une cathode chaude sous forme de filament.

On expliquera les raisons pour lesquelles il n'était pas du tout évident pour l'homme de métier des vacumètres de remplacer un filament par une cathode à micropointes. En effet, l'homme de l'art en techniques du vide est en général ignorant des développements touchant les micropointes, soit que celles-ci soient employées en affichage (écrans), soit qu'elles soient employées en physique des surfaces (microscopie tunnel). On peut par exemple consulter l'article de C. Benvenuti, (Extreme Vacua : Achievement and Expectations, Physica Stripta, vol. T 22, pages 48-54, de 1988) spécialiste du vide au CERN, qui, en 1988, préconise l'emploi de filaments chauds, mais aussi "froids" que possible sans envisager l'utilisation de cathodes à micropointes pourtant réalisées et décrites dans la littérature par Spindt dès les années 1970.

Un deuxième point important concernant l'activité inventive est le suivant : tout le monde (ou presque) croit qu'il est nécessaire d'avoir un très bon vide (meilleur que 10-8 mbar) pour que les micropointes puissent émettre un courant électronique par effet de champ et ceci de manière durable et stable. Autrement dit, il ne viendrait à l'idée de personne d'utiliser des micropointes à effet de champ dans un régime de pression de l'ordre de 10-6 à 10-3 mbar (pour justement mesurer cette pression). Or, la jauge selon l'invention n'a pas de limites différentes de celles d'une jauge Bayard-Alpert classique, c'est-à-dire que l'on peut la faire fonctionner sur une plage allant de 10-3 à 10-11 mbar, voire à partir de 10-2 mbar.

De plus, la directivité du faisceau électronique issu d'une cathode à miciropointes dépend de plusieurs paramètres, parmi lesquels la forme et la taille de la grille d'extraction ainsi que la géométrie cathode-anode, (dans l'invention, c'est la grille spiralée qui joue le rôle d'anode). La sensibilité d'une jauge à vide dépendant directement des trajectoires suivies par les électrons, il n'était pas évident que le fait de remplacer le filament par une cathode à micropointes conserve ou même améliore la sensibilité. Ceci n'a pu être vérifié qu'après simulation et expérimentation. Dans le cas où la sensibilité aurait décru d'un facteur 2 l'intérêt d'une telle jauge aurait été discutable. Actuellement la sensibilité est au moins 1,5 fois meilleure.

L'invention utilise donc une cathode à micropointes qui peut être ou non matricielle avec n électrodes cathodiques (n étant entier tel que n≧1) disposées selon des lignes et alimentant des micropointes et m grilles extractrices (m étant entier tel que m≧1) disposées selon des colonnes et isolées des électrodes cathodiques.

Dans le cas de l'utilisation de plusieurs électrodes cathodiques, cette redondance permet d'avoir toujours une émission d'électrons même si certaines de ces électrodes sont hors service.

La source d'électrons utilisée peut être une cathode émissive à micropointes d'un type quelconque tel que par exemple celle que décrit le document FR-A-87 15432. Toutefois, pour obtenir un faisceau d'électrons stable dans le temps à quelques pourcents près, ce qui est très important pour la fiabilité de la mesure, il est spécialement avantageux de choisir une cathode à micropointes munie d'une couche résistive comme c'est le cas précisément dans le document FR-A-87 15432. Cette couche résistive qui est intermédiaire entre les électrodes cahtodiques et les micropointes proprement dites, joue ainsi le rôle de résistance tampon et permet d'associer à chaque micropointe une résistance particulière conduisant ainsi à une très bonne homogénéisation de l'émission électronique.

Selon l'invention, la couche résistive peut être choisie en un matériau choisi dans le groupe comprenant l'oxyde d'indium, l'oxyde d'étain, l'oxyde de fer et le silicium dopé.

L'un des intérêts complémentaires de l'utilisation d'une cathode émissive à micropointes réside dans le fait que tous les matériaux constitutifs d'une telle cathode tels que verre, molybdène, silice, ITO (Indium Tin Oxyde) sont compatibles avec une utilisation en ultravide. Notons également que si l'on dépose la cathode sur substrat de silicium, on pourra augmenter la température d'étuvage (nécessaire à la réalisation de l'ultra-vide) jusqu'à 600°C, ce qui serait impossible sur substrat verre. Cependant, la plupart des étuvages ne dépassant pas 350°C, la question ne se posera pas la plupart du temps.

De façon avantageuse, les électrodes cathodiques sont portées à un potentiel Vc, les grilles d'extraction à un potentiel Vg et la grille-anode à un potentiel Va, tels que les électrons émis par la source possèdent tous une énergie cinétique initiale égale à -e.(Vg-Vc) pouvant aller d'une valeur minimum nécessaire à l'extraction des électrons à une valeur maximum inférieure ou égale à -e.(Va-Vc), e étant la charge électronique.

L'utilisation d'électrons possédant de telles énergies initiales permet une bonne sensibilité du vacumètre, compte tenu du fait qu'une grande partie des électrons ne sont pas piégés lors de leur premier passage à travers la grille, contrairement au cas des électrons émis avec une énergie quasiment nulle par les filaments chauffés.

De préférence, le rapport des distances entre d'une part grilles d'extraction et enceinte et d'autre part grille-anode et enceinte est égal au rapport des tensions entre d'une part grilles d'extraction et enceinte et d'autre part grille-anode et enceinte.

Cette égalité permet d'obtenir un champ dont la norme est homogène dans le vacumètre entre grille-anode et enceinte.

L'invention a également pour objet un vacumètre à ionisation comportant une source d'électrons à cathode émissive à micropointes, une grille-anode de collection de ces électrons et un collecteur des ions caractérisé en ce qu'il comporte en outre :
- une première alimentation en courant continu pour polariser positivement à Vc les électrodes cathodiques de la source électronique par rapport à l'enceinte ;
- une deuxième alimentation en courant continu pour polariser à Vg les grilles d'extraction des électrons à un potentiel variable, positif par rapport aux électrodes cathodiques ;
- une troisième alimentation en courant continu pour polariser à Va la grille d'anode de collection des électrons, positivement par rapport à la grille d'extraction des électrons, les trois alimentations précédentes étant montées en série entre l'enceinte et la grille d'anode de collection des électrons ;
- un premier moyen de mesure de courant monté entre la deuxième alimentation et la troisième alimentation pour mesurer le courant électronique ;
- un second moyen de mesure de courant monté entre le collecteur des ions et l'enceinte pour mesurer le courant ionique ;
- des moyens de traitement reliés aux premier et second moyens de mesure de courant pour calculer la pression de l'ultravide régnant dans l'enceinte à partir des valeurs lues du courant électronique et du courant ionique.

Les moyens de mesure de courant sont par exemple des ampèremètres.

Selon un mode de mise en oeuvre particulièrement intéressant du vacumètre, objet de l'invention, ce dernier comporte en outre un circuit de synchronisation de la deuxième alimentation qui peut alors être pulsée et des deux moyens de mesure de courant qui sont également pulsables pour réaliser le fonctionnement de l'appareil selon un mode d'échantillonnage dans le temps.

Ce circuit de synchronisation permet alors un fonctionnement en régime intermittant selon un mode d'échantillonnage pulsé dans le temps.

De toute façon l'invention sera mieux comprise en se référant à la description d'exemples de mise en oeuvre donnés à titre illustratif et non limitatif et qui seront fait en se référant aux figures 2 à 4 suivantes sur lesquelles :
- la figure 2 est le schéma d'un mode de réalisation préférentiel d'une cathode émissive à micropointes utilisée dans le vacumètre objet de l'invention ;
- la figure 3 est un schéma de principe général d'un vacumètre à ionisation selon l'invention ;
- la figure 4 est un schéma général du montage pratique du vacumètre de la figure 3 assorti de ses moyens d'alimentation et de traitement de signal.

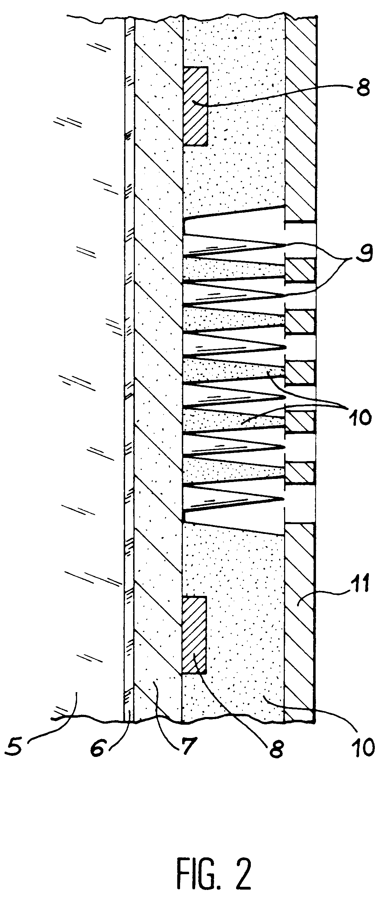

La cathode émissive à effet de champ de la figure 2 comprend essentiellement sur un substrat 5, une couche de silice 6 recouverte d'une couche résistive 7. Sur la couche résistive 7, sont situées les électrodes cathodiques 8 (avec n entier tel que n≧1) destinées à l'alimentation des micropointes 9. Une couche isolante 10 sépare les électrodes cathodiques 8 des m électrodes de grille d'extraction des électrons 11 (avec m entier tel que m≧1). Les grilles d'extraction d'électrons 11 sont ajourées au-dessus de chaque micropointe 9 de façon à permettre l'émission des électrons.

L'intérêt de la couche résistive 7 concernant l'homogénéisation du flux d'électrons a déjà été expliqué précédemment.

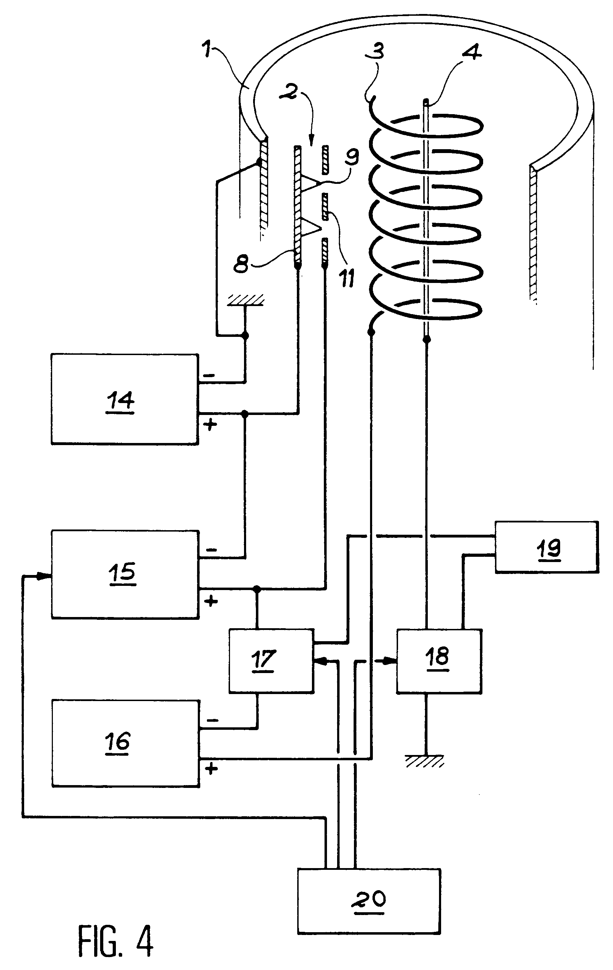

En se référant maintenant à la figure 3 qui est un schéma général d'un vacumètre à ionisation selon l'invention, on retrouve, comme dans la figure 1, l'enceinte à vide 1, la cathode émissive 2, la grille d'anode 3 et le collecteur d'ions 4. Toutefois et conformément à l'invention, la cathode émissive 2 n'est plus un filament chauffé, mais une cathode à micropointes conforme par exemple au schéma de la figure 2 et dont la direction priviliègée d'émission est située vers la grille d'anode 3 et le collecteur d'ions 4.

Afin que les électrons ne soient pas piégés par l'importante surface de l'enceinte, le potentiel de référence Vc (potentiel des micropointes ou potentiel des électrodes cathodiques) par rapport auquel ils sont émis est toujours supérieur à celui (Ve) de l'enceinte. Une valeur standard de Vc-Ve est par exemple de 45 V pour une enceinte portée à la masse.

Les grilles d'extraction 11 sont alors polarisées à une tension variable (Vg-Vc) par rapport aux électrodes cathodiques suivant l'intensité d'extraction que l'on veut obtenir. On peut avoir une tension moyenne de l'ordre de 90 V, ce qui revient à polariser les grilles d'extraction 11 à une tension Vg-Ve de 135 V par rapport à l'enceinte généralement à la masse.

Il a été démontré que la probabilité de collision des électrons sur les atomes et molécules de gaz en fonction de leur énergie passe par un maximum qui se trouve pour la plupart des gaz entre 100 et 150 eV. C'est pourquoi il est avantageux de polariser la grille d'anode 3 à un potentiel (Va-Vc) égal à 130 V par rapport aux électrodes cathodiques 8, c'est-à-dire à 175 V par rapport à l'enceinte 1.

Le rapport des distances enceinte 1-grille d'extraction 11 à enceinte 1-grille d'anode 3 doit alors être à peu près de 135/175.

D'une manière plus générale, on peut dire que les rapports des distances et des tensions enceinte 1-grille d'extraction 11 à enceinte 1-grille d'anode 3 doivent être égaux. Cette précaution doit être prise car toute discontinuité du champ a tendance à augmenter le moment cinétique des électrons qui y sont soumis, et ainsi à les détourner d'une trajectoire strictement radiale dont on a expliqué plus haut la nécessité.

Le collecteur 4 est un fil vertical centré dans ce mode de réalisation sur l'axe de la jauge étant bien entendu que ceci n'est pas toujours le cas. La grille d'anode est par exemple un fil enroulé en hélicoïde autour du collecteur 4 ; pour une jauge Bayard-Alpert montée sur une bride classique, elle a généralement un diamètre de 20 mm, une hauteur de quelquess centimètres (entre 2 et 5) avec un pas de quelques millimètres (10 à 20 spires). La distance séparant la grille 3 de la cathode 2 à micropointes doit alors être, avec les valeurs de potentiels donnés précédemment, de 1,7 mm. L'utilisation d'une cathode à micropointes permet d'augmenter le volume interne à la grille 3 par rapport à une jauge classique et donc la probabilité d'ionisation du gaz résiduel. Cette augmentation de volume est possible du fait de la possibilité du rapprochement de la cathode à micropointes qui ne chauffe pas, à l'inverse des filaments.

La cathode à micropointes peut être par exemple fixée directement à l'aide des contacts électriques 13 rigides qui permettent aussi sa polarisation. La fixation peut être faite par soudure avec les plots de contacts gravés sur la cathode ou par pression à l'aide de lames ressorts.

En se référant maintenant à la figure 4, on va décrire un exemple de montage du vacumètre objet de l'invention permettant son exploitation dans les meilleures conditions et selon deux modes de fonctionnement, l'un en continu, l'autre en échantillonnage selon un mode pulsé.

Sur la figure 4, on retrouve dessiné schématiquement, les éléments essentiels du vacumètre à ionisation de la figure 3, ainsi que de la cathode émissive à micropointes de la figure 2, les éléments communs à cette figure 4 et aux figures 2 et 3 portant les mêmes nombres de références. L'appareil de la figure 4 comprend en outre, trois alimentations électriques à courant continu 14, 15 et 16 montées en série entre la masse reliée à l'enceinte et la grille d'anode collectrice d'électrons 3 de la façon suivante :
L'alimentation 14 permet de polariser positivement à Vc les électrodes cathodiques 8 par rapport à la masse. L'alimentation 15 permet de polariser à Vg la ou les grilles d'extraction 11 à un potentiel variable positif par rapport aux électrodes cathodiques 8, la différence de potentiel Vg-Vc est par exemple 90 V.

L'alimentation 16 permet de polariser à Va la grille d'anode 3 positivement par rapport aux grilles d'extraction 11 de façon que la différence de potentiel Va-Vc soit la valeur voulue définie précédemment. Entre ces deux alimentations 15 et 16, l'ampèremètre 17 permet de mesurer le courant électronique recueilli par la grille 3. L'ampèremètre 18 relié au collecteur 4 permet de mesurer le courant d'ions s'écoulant à la masse. La mesure de ces deux courants électronique et ionique permet la mesure de la pression à l'aide d'une unité de traitement 19 classique.

Dans le cas où l'on veut un fonctionnement en échantillonnage, c'est-à-dire où la mesure ne se fait pas en continu, mais seulement pendant une courte période de temps, on peut synchroniser l'alimentation 15 qui doit être alors pulsable et les deux ampèremètres 17 et 18 qui doivent l'être également par une synchronisation extérieure 20. Par exemple, on peut limiter la mesure à 1 ms avec une fréquence de répétition variable suivant les besoins, l'ionisation n'ayant lieu que pendant le temps utile de la mesure.

Ceci permet dans un système très sensible de faire une mesure de pression et de garder la maîtrise de la connaissance du vide sans perturber ce dernier. Certaines expériences de physique requièrent par exemple l'arrêt des jauges car les courants électroniques perturbent les détecteurs.

Avec le mode de réalisation de la figure 4, pour un fonctionnement en mode continu, on obtient un coefficient de jauge compris entre 25 et 30 mbar⁻¹ (pour l'azote), ce qui est environ deux fois meilleur que la plupart des jauges Bayard-Alpert classiques.

L'intérêt particulier du montage de la figure 4 est de posséder les qualités des jauges Bayard-Alpert en s'affranchissant des problèmes propres à l'utilisation d'une cathode chaude. Ses principaux avantages par rapport aux performances d'une jauge Bayard-Alpert peuvent se résumer comme suit :
- directivité naturelle de l'émission dans un angle solide de π/3 centré sur la normale au plan de la cathode et émission d'électrons avec une vitesse initiale élevée (énergie environ de 100eV). Il en résulte que la focalisation du faisceau dépend nettement moins du positionnement de la source dans le champ.

Par ailleurs, du fait de leur haute vitesse initiale, les électrons pénètrent dans la zone délimitée par la grille sans être piégés par celle-ci, ce qui augmente la longueur moyenne des trajectoires des électrons et donc la sensibilité de la jauge.

La bonne rigidité du réseau de micropointes assure de plus une stabilité mécanique excellente et la cathode utilisée assure une bonne régularité de l'émission. Toutes ces caractéristiques contribuent à une nette amélioration de la stabilité et la reproductibilité des mesures ;
- amélioration de l'émissivité par unité de surface et bonne rigidité naturelle. Donc à courant d'émission équivalent, la surface 'de la cathode est plus faible que celle du filament, ce qui permet d'avoir une source mieux localisée ;
- outre le fonctionnement en échantillonnage, la rapidité de réaction de la source permet de stopper la mesure en cas de problème (par exemple brusque remontée de pression) avec efficacité dans un temps très court.

On peut enfin citer un certain nombre d'avantages directement liés au remplacement d'une cathode chaude par une cathode froide :
- pas de rayonnement infrarouge de la source, ce qui permet une utilisation dans une ambiance cryogénique ;
- pas de rayonnement ultraviolet de la source et donc diminution de l'effet Röntgen ;
- pas de création d'espèces filles par échauffement. Les ions sont donc créés uniquement par choc avec les électrons ; la mesure est alors plus exacte ;
- pas de dégazage de filament, et donc possibilité d'une mesure précise juste après allumage ;
- pas d'évaporation de tungstène ou de polluants comme le monoxyde de carbone.

Tous ces phénomènes sont directement liés au chauffage du filament dans les jauges Bayard-Alpert classiques ;
- suppression du thorium, élément (faiblement) radioactif et chimiquiement dangereux utilisé pour la fabrication des filaments à faible travail de sortie, c'est-à-dire nécessitant un travail assez faible pour extraire les électrons. Ce composé est souvent utilisé pour améliorer la trop faible émissivité des filaments en tungstène pur ;
- faible consommation (réduction de la consommation d'un facteur 10 à 100).

## Revendications

1. Vacumètre a ionisation comportant, à la manière des jauges du type Bayart-Alpert, dans une enceinte (1) renfermant une atmosphère à très basse pression dont on veut mesurer le degré d'ultra vide, une cathode (2) source d'électrons, une grille-anode (3) de collection de ces électrons associée elle-même à un collecteur (4) des ions résultant du choc des électrons sur les molécules de gaz de l'atmosphère à très basse pression, caractérisé en ce que la source d'électrons est une cathode froide à micropointes.

2. Vacumètre selon la revendication 1, caractérisé en ce que la cathode à micropointes comprend n électrodes cathodiques, n étant entier, disposées selon des lignes et alimentant des micropointes et m grilles d'extraction, m étant entier, disposées selon des colonnes et isolées des électrodes cathodiques.

3. Vacumètre selon la revendication 2, caractérisé en ce que les électrodes cathodiques sont portées à un potentiel Vc, les grilles d'extraction à un potentiel Vg et la grille-anode à un potentiel Va, tels que les électrons émis par la source possèdent tous une énergie cinétique initiale égale à -e.(Vg-Vc) pouvant aller d'une valeur minimum nécessaire à l'extraction des électrons à une valeur maximum inférieure ou égale à -e.(Va-Vc), e étant la charge électronique.

4. Vacumètre selon la revendication 2, caractérisé en ce que le rapport des distances entre, d'une part, grilles d'extraction et enceinte et, d'autre part, grille-anode et enceinte, est égal au rapport des tensions entre, d'une part, grilles d'extraction et enceinte et d'autre part, grille-anode et enceinte.

5. Vacumètre à ionisation selon la revendication 1, caractérisé en ce que les électrodes cathodiques (8) d'alimentation des micropointes sont au contact d'une couche résistive (7) alimentant les micropointes.

6. Vacumètre à ionisation selon la revendication 5, caractérisé en ce que la couche résistive (7) est en un matériau choisi dans le groupe comprenant l'oxyde d'indium, l'oxyde d'étain, l'oxyde de fer et le silicium dopé.

7. Vacumètre à ionisation selon l'une quelconque des revendications 1 à 6 précédentes, caractérisé en ce qu'il comporte :
- une première alimentation en courant continu (14) pour polariser positivement à V_{c} les électrodes cathodiques (8) de la source électronique ;
- une deuxième alimentation (15) en courant continu pour polariser à V_{g} les grilles (11) d'extraction des électrons à un potentiel variable, positif par rapport aux électrodes cathodiques (8) ;
- une troisième alimentation (16) en courant continu pour polariser à Va la grille d'anode (3) de collection des électrons, positivement par rapport à la grille (11) d'extraction des électrons, les trois alimentations précédentes étant montées en série entre l'enceinte et la grille (3) d'anode de collection des électrons ;
- un premier moyen de mesure de courant (17) monté entre la deuxième alimentation (15) et la troisième alimentation (16) pour mesurer le courant électronique ;
- un second moyen de mesure de courant (18) monté entre le collecteur des ions (4) et l'enceinte pour mesurer le courant ionique ;
- des moyens de traitement (19) reliés aux premier (17) et second (18) moyens de mesure de courant pour calculer la pression de l'ultravide régnant dans l'enceinte (1) à partir des valeurs lues du courant électronique et du courant ionique.

8. Vacumètre à ionisation selon la revendication 7, caractérisé en ce qu'il comporte en outre un circuit de synchronisation (20) de la deuxième alimentation (15) qui est pulsable et des deux moyens de mesure de courant (17, 18) qui sont également pulsables pour réaliser le fonctionnement de l'appareil selon un mode d'échantillonnage dans le temps.

## Claims

1. Ionization vacuum gauge comprising, similarly to Bayard-Alpert type gauges, in a chamber (1) containing an extremely low pressure atmosphere for which it is desired to measure the ultra-vacuum degree, an electron source cathode (2) and one anode grid (3) for collecting these electrons associated with a collector for collecting ions resulting from the impact of the electrons on the gas molecules of the extremely low pressure atmosphere, characterized in that the electron source is a cold micropoint cathode.

2. Vacuum gauge according to claim 1, characterized in that the micropoint cathode includes n cathode electrodes (n being a whole number) disposed along lines and feeding the micropoints, and m extraction grids (m being a whole number) disposed along columns and isolated from the cathode electrodes.

3. Vacuum gauge according to claim 2, characterized in that the cathode electrodes are brought to a potential Vc, the extraction grids to a potential Vg and the anode grid to a potential Va so that the electrons emitted by the source all possess an initial kinetics energy equal to -e.(Vg-Vc) able to extend from a minimum value required for the extraction of the electrons to a maximum value less than or equal to -e.(Va-Vc), e being the electron charge.

4. Vacuum gauge according to claim 2, characterized in that the ratio of the distances between firstly the extraction grids and the chamber, and secondly the anode grid and the chamber is equal to the ratio of voltages between firstly the extraction grids and the chamber, and secondly the anode grid and the chamber.

5. Ionization vacuum gauge according to claim 1, characterized in that the cathode electrodes (8) for feeding the micropoints are in contact with a resistive film (7) feeding the micropoints.

6. Ionisation vacuum gauge according to claim 5, characterized in that the resistive film (7) is a material selected from the group including indium oxide, tin oxide, iron oxide and doped silicon.

7. Ionization vacuum gauge according to any one of the claims 1 to 6, characterized in that it comprises:
- one first d.c. power unit (14) for positively polarizing at Vc the cathode electrodes of the electron source,
- one second d.c. power unit (15) for polarizing at Vg the extraction grids (11) of the electrons at a variable potential which is positive with respect to the cathode electrodes (8),
- one third d.c. power unit (16) for positively polarizing at Va the electron collection anode grid (3) with respect to the electron extraction grid (11), said three power units being connected in series between the chamber and the electron collection anode grid (11),
- one first current measuring device (17) mounted between the second power unit (15) and the third power unit (16) so as to measure the electron current,
- one second current measuring device (18) mounted between the ion collector (4) and the chamber so as to measure the ion current,
- processing means (19) connected to the first (17) and second (18) current measuring means so as to calculate the pressure of the ultra-vacuum existing in the chamber (1) on the basis of the read values of the electron current and the ion current.

8. Ionization current according to claim 7, characterized in that it further comprises a pulsable circuit (20) for synchronization of the second power unit (15) and two current measuring devices (17, 18), also pulsable, for making the device operate according to a time-sampling mode

## Patentansprüche

1. Ionisierungs-Vakuum-Meßgerät umfassend in der Art von Meßgeräten vom Typ Bayart-Alpert in einer Einfassung (1), die eine Athmosphäre mit sehr geringem Druck einschließt, deren Ultravakuumwert man messen möchte, eine Kathode (2) als Elektronenquelle, eine Gitteranode (3) zum Sammeln dieser Elektroden, die selbst mit einem Kollektor (4) für Ionen zugeordnet ist, die sich durch den Stoß der Elektronen gegen die Gasmoleküle der Athmosphäre mit sehr geringem Druck ergeben, **dadurch gekennzeichnet**, daß die Elektronenquelle eine kalte Kathode mit Mikrospitzen ist.

2. Vakuum-Meßgerät gemäß Anspruch 1, **dadurch gekennzeichnet**, daß die Kathode mit Mikrospitzen n Kathodenelektroden umfaßt, n ist ganzzahlig, die entlang Zeilen angeordnet sind und die Mikrospitzen versorgen, und m Gewinnungsgitter, m ist ganzzahlig, die entlang Spalten angeordnet und von den Kathodenelektroden isoliert sind.

3. Vakuum-Meßgerät gemäß Anspruch 2, **dadurch gekennzeichnet**, daß die Kathodenelektroden auf einem Potential V_{c}, die Gewinnungselektroden auf einem Potential V_{g} und die Gitteranode auf einem Potential Vₐ liegen, so daß die von der Quelle emittierten Elektronen alle eine kinetische Anfangsenergie besitzen, die gleich -e(V_{g}-V_{c}) ist, die von einem Minimalwert, der für die Gewinnung von Elektronen notwendig ist, bis zu einem Maximalwert gehen kann, der kleiner oder gleich -e(Vₐ-V_{c}) ist, wobei e die Elektronenladung ist.

4. Vakuum-Meßgerät gemäß Anspruch 2, **dadurch gekennzeichnet**, daß das Verhältnis der Abstände zwischen einerseits den Gewinnungsgittern und der Einfassung und andererseits der Gitteranode und der Einfassung gleich dem Verhältnis der Spannungen zwischen einerseits den Gewinnungsgittern und der Einfassung und andererseits der Gitteranode und der Einfassung ist.

5. Ionisations-Vakuum-Meßgerät gemäß Anspruch 1, **dadurch gekennzeichnet**, daß die Kathodenelektroden (8) zur Versorgung der Mikrospitzen mit einer Widerstandsschicht (7) in Berührung sind, die die Mikrospitzen speist.

6. Ionisations-Vakuum-Meßgerät gemäß Anspruch 5, **dadurch gekennzeichnet**, daß die Widerstandsschicht (7) aus einem Material ist, das aus der Gruppe ausgewählt ist, die Indiumoxid, Zinnoxid, Eisenoxid und dotiertes Silicium umfaßt.

7. Ionisations-Vakuum-Meßgerät gemäß irgendeinem der vorhergehenden Ansprüche 1 bis 6, **dadurch gekennzeichnet**, daß es umfaßt:
- eine erste Gleichstromversorgung (14), um die Kathodenelektroden (8) der Elektronenquelle positiv auf V_{c} zu polarisieren;
- eine zweite Gleichstromversorgung (15), um die Gitter (11) zur Elektronengewinnung auf ein veränderbares, in Bezug auf die Kathodenelektronen (8) positives Potential Vg zu polarisieren;
- eine dritte Gleichstromversorgung (16), um die Gitteranode (3) zum Sammeln von Elektronen positiv in Bezug auf das Gitter (11) zur Elektronengewinnung auf Va zu polarisieren, wobei die drei vorhergehenden Versorgungen in Reihe zwischen der Einfassung und dem Anodengitter (3) zum Sammeln von Elektronen angebracht sind;
- eine erste Strommeßeinrichtung (17), die zwischen der zweiten Versorgung (15) und der dritten Versorgung (16) geschaltet ist, um den Elektronenstrom zu messen;
- eine zweite Strommeßeinrichtung (18), die zwischen den Ionensammler (4) und der Einfassung geschaltet ist, um den Ionenstrom zu messen;
- Verarbeitungseinrichtungen (19), die mit der ersten (17) und der zweiten (18) Strommeßeinrichtung verbunden sind, um den Druck des Ultravakuums, der in der Einfassung (1) herrscht, aufgrund der erfaßten Werte des Elektronenstroms und des Ionenstroms zu berechnen.

8. Ionisations-Vakuum-Meßgerät gemäß Anspruch 7 **dadurch gekennzeichnet**, daß es ferner eine Synchronisierungsschaltung (20) zweiten Versorgung (15) umfaßt, die pulsbar ist, und der zwei Strommeßeinrichtungen (17,18), die ebenfalls pulsbar sind, um den Betrieb des Geräts mit einem Probennahmemodus in der Zeit durchzuführen.
